(19) Europäisches Patentamt

European Patent Office

Office européen des brevets

(11) **EP 0 563 687 B1**

(12) **EUROPÄISCHE PATENTSCHRIFT**

(45) Veröffentlichungstag und Bekanntmachung des Hinweises auf die Patenterteilung:
**12.08.1998 Patentblatt 1998/33**

(51) Int. Cl.$^6$: **C03B 37/14**

(21) Anmeldenummer: **93104388.9**

(22) Anmeldetag: **18.03.1993**

(54) **Gemahlene Kurzglasfasern und ein Verfahren zu ihrer Herstellung**

Milled chopped fibres and process for producing the same

Fibres coupées moulues et un procédé de préparation

(84) Benannte Vertragsstaaten:
**BE DE ES FR GB IT NL SE**

(30) Priorität: **31.03.1992 DE 4210500**

(43) Veröffentlichungstag der Anmeldung:
**06.10.1993 Patentblatt 1993/40**

(73) Patentinhaber:
- **BAYER AG**
  **51368 Leverkusen (DE)**
- **BAYER ANTWERPEN N.V.**
  **2040 Antwerpen (BE)**

(72) Erfinder:
- **Audenaert, Raymond, Dr.**
  **B-9220 Hamme (BE)**
- **Hennen, Alban**
  **W-5090 Leverkusen 3 (DE)**
- **Schmoll, Josef, Dipl.-Ing.**
  **W-5632 Wermelskirchen 2 (DE)**
- **Goller, Heinz, Dr.**
  **W-5068 Odenthal-Osenau (DE)**

(56) Entgegenhaltungen:
**EP-A- 0 334 171       FR-A- 2 578 833**
**US-A- 4 145 202**

- **PATENT ABSTRACTS OF JAPAN vol. 7, no. 185 (C-181) 13. August 1983 & JP-A-58 088 137 (NITTO BOSEKI KK) 26. Mai 1983**

**Beschreibung**

Die vorliegende Erfindung betrifft gemahlene Kurzglasfasern und ein vereinfachtes Verfahren zur Herstellung dieser gemahlenen Glasfasern.

In EP-A-334 171 werden Glasfasern mit einer mittleren Länge von ca. 100 bis 300 μm und eines mittleren Durchmessers von ca. 14 μm („milled fibre MF 7901" der Bayer AG, Leverkusen) beschrieben. Diese Glasfasern werden nach bekannten Verfahren hergestellt und in thermoplastischen Polyurethanen eingesetzt.

Glasfasern werden bisher im Spinn- und Wickelprozeß zu beschlichteten oder unbeschlichteten 'Cakes' verarbeitet. Diese Cakes, die einen Feuchtegehalt von ca. 12 Gew.-% aufweisen, werden dann in Umluftöfen getrocknet, mit einer Schlagschere vorzerkleinert und anschließend in Schlagkreuzmühlen zu sogenannten 'Milled Fibres' gemahlen.

Nachteilig an diesem bisher durchgeführten Verfahren ist, daß das Glasfaserbündel, nachdem es abgekühlt wurde und gegebenenfalls mit einer Schlichte überzogen wurde, zuerst einmal auf eine Papphülse aufgewickelt wird, um dann als sogenannter nasser „Cake", der vom Wickeldorn abgenommen wurde, getrocknet zu werden. Nach der Trocknung wird die Papphülse aus dem „Cake" manuell entfernt, der „Cake" anschließend zu einem lockeren Hautwerk auseinandergezogen und einer Schlagschere zur Vorzerkleinerung zugeführt. Das vorzerkleinerte Produkt gelangt danach in eine Schlagkreuzmühle, in der es zu „Milled Fibres" (Kurzglasfasern) gemahlen wird.

Diese so hergestellten gemahlenen Kurzglasfasern haben den Nachteil, daß sie ein niedriges Schüttgewicht bei entsprechend kleinen mittleren Faserlängen aufweisen.

Aufgabe war es daher, verbesserte gemahlene Kurzglasfasern sowie ein verbessertes und vereinfachtes Verfahren zur Herstellung dieser gemahlenen Glasfasern („milled fibres") zur Verfügung zu stellen, ohne daß dadurch die Qualität der gemahlenen Glasfasern negativ beeinflußt wird.

Diese Aufgabe konnte durch die erfindungsgemäßen Glasfasern und das erfindungsgemäße Verfahren gelöst werden.

Gegenstand der Erfindung sind gemahlene Kurzglasfasern mit einer mittleren Faserlänge von 150 bis 300 μm und einem Schüttgewicht von 0,8 bis 0,3 g/cm$^3$ erhältlich durch Schneiden direkt im nassen Zustand ohne vorhergehende Trocknung von an einem Spinnstand anfallenden Glasfaserbündeln nach Abkühlung und gegebenenfalls nach Beschlichtung und durch Mahlen in einem Intensivmischer unter Zugabe von Flüssigkeiten, insbesondere Wasser und/oder von Schlichtemitteln und gegebenenfalls anschließende Trocknung.

Bevorzugt haben die gemahlenen Kurzglasfasern eine mittlere Faserlänge von 180 bis 250 μm und ein Schüttgewicht von 0,6 bis 0,4 g/cm$^3$.

Die erfindungsgemäßen gemahlenen Kurzglasfasern zeichnen sich durch sehr hohe Schüttgewichte bei entsprechend großen mittleren Faserlängen aus.

Im allgemeinen liegen die Faserdurchmesser der Glasfasern zwischen 8 und 24 μm, vorzugsweise zwischen 10 und 14 μm.

Zur Ermittlung der physikalischen Kenndaten der Glasfasern wurde wie folgt vorgegangen:

Das Schüttgewicht der Glasfaser ist definiert als diejenige Menge in Gramm, die 1 cm$^3$ nach lockerem Schütten in ein Gefäß einnimmt. Zuerst wird das Gefäß (250 ml Meßzylinder) leer gewogen. Danach wird soviel Glasfaser locker eingefüllt bis ein Volumen von 250 ml erreicht ist. Das Gewicht des gefüllten Meßzylinders wird erneut gewogen. Das Verfahren wird mehrmals wiederholt und die Werte gemittelt. Der Fehler in der Schüttgewichtsangabe beträgt ± 0,02 g/cm$^3$.

Für die Bestimmung der Faserlänge werden auf 3 Objektträger jeweils 1-2 Tropfen eines Wasser-Glycerin-Gemisches (1:1) gegeben. Danach werden vorsichtig fein verteilt ca. 20 mg Fasern dazugegeben. Unter dem Mikroskop wird dann der entsprechende Sichtbereich ausgezählt und ausgemessen, wobei der Bereich nicht mehr als 250 Fasern aufweisen sollte, um einwandfreies Auszählen und Ausmessen der Fasern zu garantieren. Zur Bestimmung der mittleren Faserlänge werden mindestens 600 Fasern ausgemessen. Der Fehler in der Faserlängenbestimmung beträgt 5 %.

Ein weiterer Gegenstand der Erfindung ist ein Verfahren zur Herstellung der erfindungsgemäßen gemahlenen Kurzglasfasern, welches dadurch gekennzeichnet ist, daß die am Spinnstand anfallenden Glasfasern nach Abkühlung und gegebenenfalls nach Beschlichtung ohne vorhergehende Trocknung direkt geschnitten und dann unter Zugabe von Flüssigkeiten, insbesondere Wasser und/oder Schlichtemitteln in einem Intensivmischer zu Kurzglasfasern gemahlen werden und gegebenenfalls anschließend getrocknet werden.

Bevorzugt wird soviel Flüssigkeit bzw. Wasser und/oder Schlichte zugegeben, daß wenigstens 10 Gew.-% und höchstens 40 Gew.-%, insbesondere wenigstens 22 Gew.-% und höchstens 28 Gew.-% Wasser, bezogen auf die Gesamtmenge im Mischer vorhanden sind.

Die Glasfaserbündel werden vor der Mahlung bevorzugt auf eine mittlere Länge von 3 bis 55 mm geschnitten.

In einer bevorzugten Ausführungsform des Verfahrens werden die geschnittenen Glasfaserbündel in einem Feststoff-Mischer mit einer Froudezahl Fr von

$$Fr = \frac{R \cdot w^2}{g} \gg 1$$

mit

R =      Radius der Mischwerkzeuge im Mischer
w =      Winkelgeschwindigkeit der Mischwerkzeuge
g =      Erdbeschleunigung

gemahlen.

Nach dem erfindungsgemäßen Verfahren werden direkt am Spinnstand die beschlichteten oder auch unbeschlichteten Glasfasern zu sogenannten "Chopped Strands" verarbeitet und dann ohne vorhergehende Trocknung unter Zugabe von z.B. Wasser in einem Intensivmischer zu "Milled Fibres" gemahlen.

Auch "Chopped Strands", die auf konventionellem Weg über eine sogenannte "Cake"-Zwischenstufe hergestellt werden, können nach dem neuen Verfahren zu "Milled Fibres" gemahlen werden.

Das feuchte Mahlgut (Wassergehalt bis zu ca. 30 Gew.-%) wird dann in einem Trocknungsschritt getrocknet. Als Trocknungsaggregate können z.B. Umluftöfen, HF-Öfen, Bandtrockner und Schwingplattentrockner benutzt werden.

Durch Variation der Mahlzeiten, der Produkt- und Wassermengen können "Milled Fibres"-Produkte mit unterschiedlichen mittleren Faserlängen hergestellt werden.

Die gegebenenfalls verwendeten Schlichten bestehen üblicherweise aus Filmbildnern (z.B. auf der Basis Polyurethan, Epoxidharz, Polyvinylacetat oder Mischungen daraus), Haftvermittlern (z.B. organofunktionelle Silane), Gleitmitteln (z.B. Polyethylenglykol, Polypropylenglykol oder quatäre Fettsäureamide) und gegebenenfalls Antistatika (z.B. Lithiumchlorid, Ammoniumchlorid oder Natriumhydrogenphosphat).

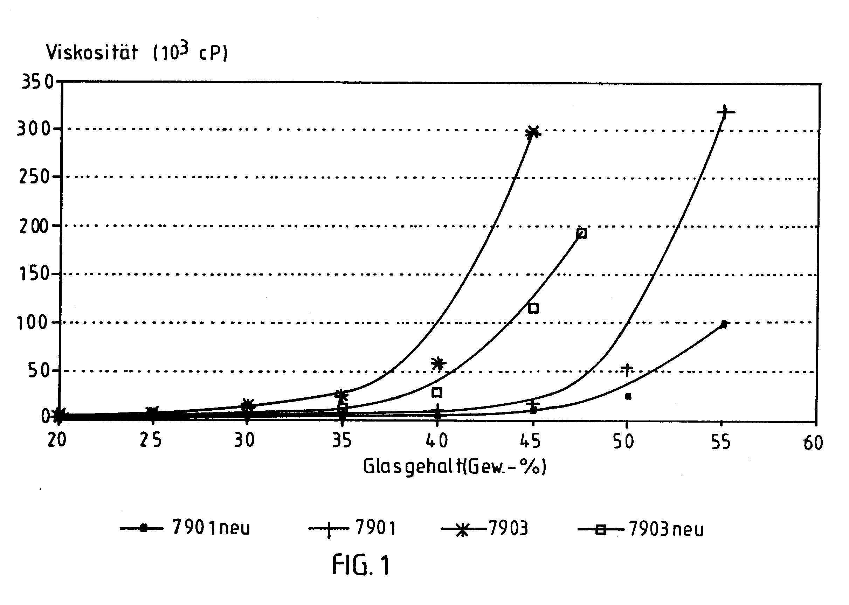

Diese erfindungsgemäßen "Milled Fibres"-Produkte unterscheiden sich insbesondere von den nach dem alten Verfahren hergestellten Produkten dadurch, daß bei vergleichbaren mittleren Faserlängen doppelt so hohe Schüttgewichte erzielt werden können (Tabelle 1). So können auch "Milled Fibres"-Produkte mit einer mittleren Faserlänge von 0,3 mm hergestellt werden, die sogar im PUR-RRIM-Prozeß[1] verar beitbar sind. In Fig. 1 sind die Eindickungskurven von bekannten "Milled Fibres" (MF 7901 und MF 7903 Handelsprodukte der Firma Bayer AG) und den erfindungsgemäßen "Milled Fibres" ("7901 Neu" und "7903 Neu") gleiche Faserlänge wie die Standardprodukte MF 7901 und MF 7903 jeweils in Polyol mit steigenden Glasgehalten dargestellt. Die Mischungsviskositäten der erfindungsgemäßen "Milled Fibres" in Polyol sind bei vergleichbaren Glasgehalten deutlich niedriger als bei den bekannten "Milled Fibres". Aufgrund der schlechten Dispergierbarkeit in Polyol wurden viele Handelsprodukte der Firma Bayer AG "Milled Fibres" bisher von den PUR-RRIM-Verarbeitern nicht eingesetzt. Die erfindungsgemäßen "Milled Fibres" können hingegen alle auch im PUR-RRIM-Verfahren eingesetzt werden.

Des weiteren können mit den erfindungsgemäßen "Milled Fibres"-Produkten aufgrund der niedrigen Mischungsviskositäten höhere Glasgehalte eingestellt werden als mit den bekannten "Milled Fibres"-Produkten.

Ein weiterer Vorteil des erfindungsgemäßen Verfahrens besteht darin, daß in dem Intensivmischer zusätzliche Beschlichtungen durchgeführt werden können. Beispielsweise können Haftvermittler, Filmbildner, Gleitmittel und Antistatika als wäßrige Dispersionen oder auch in organischen Lösungsmitteln gelöst zugegeben werden.

Die erfindungsgemäßen Kurzglasfasern ("Milled Fibres") werden bevorzugt in Thermoplasten und Duroplasten, insbesondere in Polyurethanen verwendet.

Die Erfindung soll anhand eines Beispiels näher erläutert werden.

<u>Beispiel</u>

Die am Spinnstand anfallenden Glasfaserbündel werden nach Abkühlung mit Wasser auf ca. 30°C mit einem sogenannten "Chopper" auf 4,5 mm Länge geschnitten.

30 kg dieser 4,5 mm langen "Chopped Strands" werden in einen Intensivmischer (75 l Fassungsvermögen) eingefüllt. Der Wassergehalt dieser Glasfasern beträgt ca. 15 Gew.-%. Nach Zugabe von weiteren 4 l $H_2O$ wird der Mischer in Betrieb genommen. Die Drehzahl des Rührers, der mit einer Dissolverscheibe ausgerüstet ist, beträgt 3.000 U/min im Uhrzeigersinn. Der Behälter dreht sich langsam gegen den Uhrzeigersinn.

Nach 180 Sekunden sind die "Chopped Strands" zu einem "Milled Fibres"-Produkt mit einer mittleren Länge von 240 µm vermahlen.

Nach 210 Sekunden wird eine gemahlene Kurzglasfaser ("Milled Fibres") mit einer mittleren Länge von 180 µm erhalten. Das Mahlgut aus dem Mischer wird anschließend getrocknet.

[1]PUR-RRIM-Prozeß = Polyurethan-Reinforced Reaction Injecetion Moulding-Process

Tabelle 1

| "MILLED FIBRES"-PRODUKTE | SCHÜTTGEWICHT [g/cm³] |
|---|---|
| A | 0,28 |
| B | 0,15 |
| C | 0,60 |
| D | 0,35 |

A - bekanntes Produkt - Kurzglasfasern mit einer mittleren Länge von 180 μm
B - bekanntes Produkt - Kurzglasfasern mit einer mittleren Länge von 240 μm
C - erfindungsgemäßes Produkt - Kurzglasfasern mit einer mittleren Länge von 180 μm
D - erfindungsgemäßes Produkt - Kurzglasfasern mit einer mittleren Länge von 240 μm

**Patentansprüche**

1. Verfahren zur Herstellung von gemahlenen Kurzglasfasern, dadurch gekennzeichnet, daß die an einem Spinnstand anfallenden Glasfaserbündel nach Abkühlung und gegebenenfalls nach Beschlichtung ohne vorhergehende Trocknung direkt im nassen Zustand geschnitten und dann unter Zugabe von Flüssigkeiten, insbesondere Wasser und/oder von Schlichtemitteln in einem Intensivmischer zu Kurzglasfasern gemahlen werden und gegebenenfalls anschließend getrocknet werden.

2. Verfahren gemäß Anspruch 1, dadurch gekennzeichnet, daß soviel Flüssigkeit, insbesondere Wasser, und/oder Schlichte zugegeben werden, daß, bezogen auf die Gesamtmenge im Mischer, wenigstens 10 Gew.-% und höchstens 40 Gew.-% Wasser vorhanden sind.

3. Verfahren gemäß Anspruch 1 oder 2, dadurch gekennzeichnet, daß soviel Flüssigkeit, insbesondere Wasser, und/oder Schlichte zugegeben werden, daß wenigstens 22 Geb.-% und höchstens 28 Gew.-% Wasser, bezogen auf die Gesamtmenge im Mischer vorhanden sind.

4. Verfahren gemäß einem der Ansprüche 1 bis 3, dadurch gekennzeichnet, daß die Glasfaserbündel vor der Mahlung auf eine mittlere Länge von 3 bis 55 mm geschnitten werden.

5. Verfahren gemäß einem der Ansprüche 1 bis 4, dadurch gekennzeichnet, daß die geschnittenen Glasfaserbündel in einem Feststoff-Mischer mit einer Froudezahl Fr von

$$Fr = \frac{R \cdot w^2}{g} \gg 1$$

mit

R = Radius der Mischwerkzeuge im Mischer
w = Winkelgeschwindigkeit der Mischwerkzeuge
g = Erdbeschleunigung

gemahlen werden.

6. Gemahlene Kurzglasfasern mit einer mittleren Faserlänge von 150 bis 300 μm und einem Schüttgewicht von 0,8 bis 0,3 g/cm³ erhältlich durch Schneiden direkt im nassen Zustand ohne vorhergehende Trocknung von an einem Spinnstand anfallenden Glasfaserbündeln nach Abkühlung und gegebenenfalls nach Beschlichtung und durch Mahlen in einem Intensivmischer unter Zugabe von Flüssigkeiten, insbesondere Wasser und/oder von Schlichtemitteln und gegebenenfalls anschließende Trocknung.

**7.** Gemahlene Kurzglasfasern gemäß Anspruch 6 mit einer mittleren Faserlänge von 180 bis 250 $\mu$m und einem Schüttgewicht von 0,6 bis 0,4 g/cm$^3$.

**8.** Verwendung der gemahlenen Kurzglasfasern gemäß Anspruch 6 oder 7 in Thermoplasten und Duroplasten, insbesondere in Polyurethanen.

## Claims

**1.** A process for the manufacture of milled glass fibres, characterized in that, after cooling and optionally after sizing, the glass fibre bundles obtained at the spinning stage are cut directly in the wet state, without previous drying, and are then ground to milled glass fibres in a high-efficiency mixer, with the addition of liquids, especially water, and/or sizing agents, and then optionally dried.

**2.** A process according to Claim 1, characterized in that liquid, especially water, and/or size are added in amounts such that at least 10 wt.% and at most 40 wt.% of water is present, based on the total amount in the mixer.

**3.** A process according to Claim 1 or Claim 2,
characterized in that liquid, especially water, and/or size are added in amounts such that at least 22 wt.% and at most 28 wt.% of water is present, based on the total amount in the mixer.

**4.** A process according to one of Claims 1 to 3,
characterized in that, prior to grinding, the glass fibre bundles are cut to an average length of 3 to 55 mm.

**5.** A process according to one of Claims 1 to 4,
characterized in that the cut glass fibre bundles are ground in a solid mixer with a Froude number Fr of

$$Fr = \frac{R\,w^2}{g} \gg 1$$

where

R = radius of the mixing elements in the mixer
w = angular velocity of the mixing elements
g = acceleration due to gravity.

**6.** Milled glass fibres with an average length of 150 to 300 $\mu$m and an apparent density of 0.8 to 0.3 g/cm$^3$, obtainable by a process in which, after cooling and optionally after sizing, glass fibre bundles obtained at the spinning stage are cut directly in the wet state, without previous drying, and are ground in a high-efficiency mixer, with the addition of liquids, especially water, and/or sizing agents, and then optionally dried.

**7.** Milled glass fibres according to Claim 6 with an average length of 180 to 250 $\mu$m and an apparent density of 0.6 to 0.4 g/cm$^3$.

**8.** Use of the milled glass fibres according to Claim 6 or 7 in thermoplastics and thermoset plastics, especially in polyurethanes.

## Revendications

**1.** Procédé de production de courtes fibres de verre broyées, caractérisé en ce que les faisceaux de fibres de verre formés au niveau d'un poste de filage sont coupés directement à l'état humide après refroidissement et éventuellement après ensimage, sans séchage préalable, puis sont broyés en courtes fibres de verre dans un mélangeur intensif après addition de liquides, en particulier d'eau et/ou d'agents d'ensimage, et sont éventuellement ensuite séchés.

**2.** Procédé selon la revendication 1, caractérisé en ce que l'on ajoute une quantité de liquide, en particulier d'eau, et/ou d'ensimage, telle que, par rapport à la quantité totale dans le mélangeur, il y ait au moins 10 % en masse et au plus 40 % en masse d'eau.

3. Procédé selon la revendication 1 ou 2, caractérisé en ce que l'on ajoute une quantité de liquide, en particulier d'eau, et/ou d'ensimage, telle qu'il y ait au moins 22 % en masse et au plus 28 % en masse d'eau par rapport à la quantité totale dans le mélangeur.

4. Procédé selon l'une des revendications 1 à 3, caractérisé en ce que les faisceaux de fibres de verte sont coupés avant le broyage à une longueur moyenne de 3 à 55 mm.

5. Procédé selon l'une des revendications 1 à 4, caractérisé en ce que les faisceaux de fibres de verre coupés sont broyés dans un mélangeur à solides ayant un indice de Froude Fr de

$$Fr = \frac{R \cdot w^2}{g} \gg 1$$

avec

R = rayon des outils de mélange dans le mélangeur
w = vitesse angulaire des outils de mélange
g = accélération de la pesanteur.

6. Courtes fibres de verre broyées ayant une longueur moyenne de fibres de 150 à 300 $\mu$m et une masse volumique apparente de 0,8 à 0,3 g/cm$^3$ qui peuvent être obtenues par découpage directement à l'état humide sans séchage préalable de faisceaux de fibres de verre formés au niveau d'un poste de filage après refroidissement et éventuellement après ensimage et par broyage dans un mélangeur intensif avec addition de liquides, en particulier d'eau et/ou d'agents d'ensimage puis éventuellement séchage.

7. Courtes fibres de verre broyées selon la revendication 6, ayant une longueur moyenne de fibres de 180 à 250 $\mu$m et une masse volumique apparente de 0,6 à 0,4 g/cm$^3$.

8. Utilisation des courtes fibres de verre broyées selon la revendication 6 ou 7 dans des matières thermoplastiques et des matières thermodurcissables, en particulier dans des polyuréthanes.

FIG. 1